# EUROPEAN PATENT SPECIFICATION

(11) **EP 2 236 395 B1**
(45) Date of publication and mention of the grant of the patent: **09.01.2013**
(21) Application number: 10002257.3
(22) Date of filing: 04.03.2010
(51) Int. Cl.: B62D 27/02, B62D 33/04, B62D 29/00, B62D 23/00, B62D 21/08, B62D 21/02

(54) **Connection structure of tube-shaped frames, corresponding method and vehicle body**
Verbindungsstruktur für Rohrformige Rahmen, Herstellungsverfahren und Fahrzeugrahmen.
Structure d'interconnexion de cadres tubulaires, son procédé de fabrication , et structure correspondant de véhicule.

(30) Priority: 31.03.2009 JP 2009086649
(43) Date of publication of application: 06.10.2010
(73) Proprietor: Mazda Motor Corporation, Aki-gun Hiroshima 730-8670 (JP)
(72) Inventor: Honda, Masanori, Aki-gun Hiroshima 730-8670 (JP); Sasaki, Shin, Aki-gun Hiroshima 730-8670 (JP); Hashida, Takayuki, Hiroshima-shi Hiroshima 721-0047 (JP)
(74) Representative: Müller-Boré & Partner Patentanwälte

(56) References cited:
- WO-A1-02/070322
- WO-A1-2005/021361
- DE-A1-102004 019 820
- FR-A- 775 182
- GB-A- 2 049 567
- US-A1- 2002 050 064
- US-A1- 2008 315 631

## Description

The present invention relates to a connection structure and assembly method of tube-shaped frames as well as a vehicle body.

The use of a tube-shaped frame has been developed to improve the rigidity of a vehicle body or others despite a relatively small area of a closed cross section of the tube-shaped frame.

Japanese Patent Laid-Open Publication No. 62-173378 discloses the structure in which the front pillar is comprised of the outer panel and the tube-shaped frame, and the outer pillar has the flange which is equipped with the door seal strip. This tube-shaped frame is comprised of the tube which is made by the hydro-forming and has the substantially hexagonal cross section, and the base portion of the outer panel is joined to the flat front face portion of the tube-shaped frame so that the windshield is supported at the base portion of the outer panel.

Japanese Patent Laid-Open Publication No. 2006-182079 discloses the proposal in that the hollow member with the closed cross section is made by the hydro-forming, and the outer panel is attached to the outside of this hollow member to form the front pillar.

Japanese Patent Laid-Open Publication No. 2002-145117 discloses the proposal in that the roof frame of a vehicle, which comprises the right and left front pillars, the right and left roof sides and the rear header, is made of the reinforcement members which are formed of the pipe-shaped high tension steel plates through the hydro-forming.

Japanese Patent Laid-Open Publication No. 2002-120754 discloses the structure which can improve bending rigidity or tensional rigidity of a vehicle frame by using split flanges.

DE 10 2004 019 820 A1 discloses a method involving connecting pillars and supports through joints which are encased at least in part in a reinforcement which is also fixed to the longitudinal supports and pillars which make up the support structure. The document describes a support structure for vehicle body having joints with reinforcements forming double walls whereby the reinforcements are also connected to the longitudinal supports and pillars.

In these days, the vehicle-body structure is generally designed by using a so-called "monocoque" method. The inventors of the present patent application have developed the vehicle-body structure using the above-described tube-shaped frame. In case of the tube-shaped frame structure, it may be necessary to develop the structure in which the tube-shaped frames can be properly connected ensuring the rigidity of the tube-shaped frames. That is, the spot welding, which is generally used for the monocoque body, requires a couple of electrodes to be located on both sides of a welding article. Herein, in case the spot welding is applied to the tube-shaped frame structure, a through hole may need to be formed at the tube-shaped frame so that one of the electrodes could be inserted into the inside of the tube-shaped frame through this hole. However, this though hole formed may decrease the rigidity of the tube-shaped frame improperly.

Accordingly, an object of the present invention is to provide an assembly method of tube-shaped frames in which the tube-shaped frames can be connected properly without forming any hole at the wall of the tube-shaped frame.

Another object of the present invention is to provide an assembly method of tube-shaped frames which can ensure the rigidity of the connection portion of the tube-shaped frames.

Further, another object of the present invention is to provide an assembly method of tube-shaped frames in which the tube-shaped frames can be assembled properly.

The objects are solved by the features of the independent claims. Preferred embodiments of the present invention are subject of the dependent claims.

According to an example not covered by the set of claims there is provided a connection structure of tube-shaped frames, comprising at least two tube-shaped frames, and at least two split-brackets provided at a connection portion of the tube-shaped frames, each of the split-brackets having a shape for receiving part of the plural tube-shaped frames at the connection portion, wherein the split-brackets are joined to each other at facing portions thereof, and each of the split-brackets is joined to one of the tube-shaped frames which is located adjacent thereto.

The split-brackets are configured to accommodate partly a circumference or cross-section of the tube shape of the tube-shaped frames. There is preferably provided a pair of split-brackets which pair accommodates substantially the whole circumference or cross-section of the tube shape of the tube-shaped frames. In other words, each split-bracket is configured to contact approximately 180° of the circumference of the tube shape.

However, the example is not limited thereto, but may comprise more than two split-brackets, e.g. three split-brackets which enclose an angle of approximately 120° of the tube shape, four split-brackets which enclose an angle of approximately 90° of the tube shape etc.

According to this example, the tube-shaped frames can be connected properly without forming any hole at the wall of the tube-shaped frame, ensuring the rigidity of the connection portion of the tube-shaped frames. Further, since the plural tube-shaped frames are connected via the brackets, the gap between the tube-shaped frames can be properly controlled.

Preferably, said split-brackets are joined to each other at facing portions thereof by welding, preferably by continuous welding and/or each of the split-brackets is joined to at least one of the tube-shaped frames which is located adjacent thereto by welding, preferably by one-side continuous welding.

According to another example each of the split-brackets has a flange which extends along a split line of the facing portions of the split-brackets, preferably substantial outward, and the flanges of the split-brackets which are preferably overlapped are preferably joined to each other, preferably by one-side continuous welding. Thereby, since the flanges of the split-brackets are overlapped via contact faces, even if some gap occurs between the tube-shaped frames, the gap can be properly controlled by adjusting overlapping of the flanges.

According to another example, the brackets comprise an upper split-bracket and a lower split-bracket.

According to another example, each of the upper split-bracket and the lower split-bracket has a flange which extends along a split line of the facing portions of the upper and lower split-brackets, and the flanges of the upper and lower split-brackets which are overlapped are joined to each other by one-side continuous welding. Thereby, the upper and lower split-brackets can be assembled by making the upper split-bracket approach to the lower split-bracket from above. Further, the gap between the tube-shaped frames can be properly controlled by adjusting positioning of the upper and lower split-brackets.

Preferably, at least one of said tube-shaped frames comprises an upper split-frame and a lower split-frame which are split, the upper and lower split-frames are joined to each other along the split line, preferably by one-side continuous welding to form the tube-shaped frame.

Preferably, the upper split-frame and said upper split-bracket are formed integrally and/or the lower split-frame and said lower split-bracket are formed integrally.

Further preferred, said brackets comprise a pair of split-brackets which is arranged in a specified direction.

Further preferred, one of the split-frames and one of the split-brackets are formed integrally.

Preferably; at least one of the split-brackets is provided with a protruding portion and at least one of the tube-shaped frames is provided with a corresponding protruding portion.

According to an aspect of the present invention, there is provided an assembly method of tube-shaped frames, comprising the steps of:
providing at least two tube-shaped frames;
arranging at least two split-brackets at a connection portion of said tube-shaped frames, each of the split-brackets having a shape for receiving part of the tube-shaped frames at said connection portion,
joining said split-brackets to each other at facing portions thereof, and
joining each of the split-brackets to at least one of the tube-shaped frames which is located adjacent thereto.

Preferably, the assembly method further comprising the steps of:
welding said split-brackets at facing portions thereof to each other, preferably by continuous welding; and/or
welding each of the split-brackets to at least one of the tube-shaped frames which is located adjacent thereto, preferably by one-side continuous welding.

According to the invention, the tube-shaped frames comprise a pair of roof side frames which are provided at both sides of a vehicle body and a roof cross member which extends substantially perpendicularly to the roof side frames so as to connect to the roof side frames at both ends thereof. The assembly method preferably further comprises:
a step of providing brackets for connecting the both ends of the roof cross member to the roof side frames.

According to the invention, the assembly method further comprises:
a step of providing a pair of split-brackets which is arranged in a specified direction, preferably a lower split-bracket and an upper split-bracket, each of the split-brackets having a flange which extends along a split line of the split-brackets;
a first step of joining one of the split-brackets to a portion of the roof side frame, preferably by one-side continuous welding;
a second step of joining the other of the split-brackets to another portion of the end of the roof cross member, preferably by one-side continuous welding;
a third step of assembling the other of the split-brackets joined to the roof cross member to the one of the split-brackets joined to the roof side frame;
a fourth step of joining the flanges of the split-brackets which are overlapped.

Further preferred, the fourth step of joining the flanges of the split brackets comprises the steps of:
temporary welding; and
a fifth step of joining said flanges joined by the temporary welding by one-side continuous welding.

According to another aspect of the present invention, there is provided an assembly method of tube-shaped frames, in which the tube-shaped frames comprise a pair of roof side frames which are provided at both sides of a vehicle body and a roof cross member which extends perpendicularly to the roof side frames so as to connect to the roof side frames at both ends thereof, the assembly method comprising a step of providing brackets for connecting the both ends of the roof cross member to the roof side frames, the brackets comprising an upper split-bracket and a lower split-bracket, each of the upper split-bracket and the lower split-bracket having a flange which extends along a split line of the upper and lower split-brackets, a first step of joining the lower split-bracket to a lower portion of the roof side frame by one-side continuous welding, a second step of joining the upper split-bracket to an upper portion of the end of the roof cross member by one-side continuous welding, a third step of assembling the upper split-bracket joined to the roof cross member to the lower split-bracket joined to the roof side frame, a third step of joining the flanges of the upper and lower split-brackets which are overlapped by temporary welding, and a fifth step of joining the flanges joined by the temporary welding by one-side continuous welding.

According to this aspect of the present invention, the tube-shaped frames can be assembled properly.

According to another example not covered by the set of claims there is provided a vehicle body having a connection structure of tube-shaped frames, as described above, wherein the tube-shaped frames comprise at least one of a front pillar, center pillar or rear pillar connected to a side sill, a right or left side sill, a cross member extending in a vehicle width direction, a right or left side frame, a right or left roof side frame, a front or rear header or a roof cross member extending in a vehicle width direction.

Other features, aspects, and advantages of the present invention will become apparent from the following description which refers to the accompanying drawings.
FIG. **1** is an exploded perspective view of a connection structure of two tube-shaped frames which are connected in a T shape according to a first embodiment.
FIG. **2** is a plan view of a T-shaped connection portion of FIG. 1.
FIG. **3** is an explanatory diagram showing a making method of the tube-shaped frame.
FIG. **4** is a sectional view of the tube-shaped frame which is made by the making method shown in FIG. **3**.
FIG. **5** is a sectional view of a modification of the tube-shaped frame of FIG. **4**.
FIG. **6** is a sectional view of another modification of the tube-shaped frame of FIG. **4**.
FIG. **7** is a sectional view of a tube-shaped frame which is made of two members having a U-shaped cross section.
FIG. **8** is a sectional view of a modification of the tube-shaped frame of FIG. **4****.**
FIG. **9** is a plan view of a modification of the connection structure of FIGS. **1** and **2**.
FIG. **10** is a perspective view of the connection structure of FIG. **9****.**
FIG. **11** is an exploded perspective view of the connection structure of FIG. **9**.
FIG. **12** is a plan view of a connection structure according to a second embodiment.
FIG. **13** is a perspective view of the second embodiment shown in FIG. **12****.**
FIG. **14** is an exploded perspective view of the second embodiment shown in FIG. **12**.
FIG. **15** is a plan view of a connection structure according to a third embodiment.
FIG. **16** is a perspective view of the third embodiment shown in FIG. **15**.
FIG. **17** is a perspective view of the third embodiment, when viewed in a different direction from FIG. **16**.
FIG. **18** is an exploded perspective view of the third embodiment shown in FIG. 15.
FIG. **19** is an exploded perspective view of a modification of the third embodiment.
FIG. **20** is an exploded perspective view of another modification of the third embodiment.
FIG. **21** is a perspective view of a connection structure according to a first example
FIG. **22** is an exploded perspective view of the connection structure of the first example shown in FIG. **21**.
FIG. **23** is an exploded perspective view of the connection structure of the first example shown in FIG. **21**, when viewed in a different direction from FIG. **22**.
FIG. **24** is a view of a connection structure of two tube-shaped frames which are connected in series according to a second example.
FIG. **25** is a sectional view taken along line X25-X25 of FIG. **24****.**
FIG. **26** is an exploded perspective view of the connection structure of the second example shown in FIG. **24**.
FIG. **27** is an exploded perspective view of a modification of the connection structure of the second example shown in FIG. **24****.**
FIG. **28** is an exploded perspective view of the connection structure shown in FIG. **27**.
FIG. **29** is a plan view of a connection structure of two tube-shaped frames which are connected in an L shape according to a third example .
FIG. **30** is a perspective view of the connection structure of the third example of FIG. **29**.
FIG. **31** is a perspective view of the connection structure of the third example of FIG. **29**, when viewed in a different direction from FIG. **30**.
FIG. **32** is an exploded perspective view of the connection structure of the third example of FIG. **29**.
FIG. **33** is a perspective view of a modification of the connection structure of the third example of FIGS. **29** through **32**.
FIG. **34** is an exploded perspective view of the modification of the connection structure of the third example shown in FIG. **33**.
FIG. **35** is an exploded perspective view of the modification of the connection structure of the third example shown in FIG. **33**, when viewed in a different direction from FIG. **34**.
FIG. **36** is a plan view of a connection structure of three tube-shaped frames which are connected in a Y shape according to a fourth example.
FIG. **37** is a perspective view of the connection structure of the fourth example of FIG. **36**.
FIG. **38** is an exploded perspective view of the connection structure of the fourth example of FIG. **36****.**
FIG. **39** is a perspective view of a modification of the connection structure of the fourth example of FIGS. **36** through **38**.
FIG. **40** is an exploded perspective view of the connection structure shown in FIG. **39**.
FIG. **41** is an exploded perspective view of the connection structure shown in FIG. **39**, when viewed in a different direction from FIG. **40**.
FIG. **42** is an exploded perspective view of a connection structure of an fifth example.
FIG. **43** is a perspective view of a modification of the connection structure of the fifth example.
FIG. **44** is a perspective view of the connection structure of the fifth example.
FIG. **45** is a perspective view of the connection structure of the fifth example, when viewed in a different direction from FIG. **44**.

Hereinafter, preferred embodiments of the present invention will be described referring to the accompanying drawings. Various types of connection structure of tube-shaped frames described below are applicable to various portions of an automotive vehicle. Herein, exemplified portions in this application are as follows:
(i) in case a front pillar, a center pillar and a rear pillar are made of a tube-shaped frame, a connection between respective lower ends of these pillars and a side sill;
(ii) in case right and left side sills are made of a tube-shaped frame, and a cross member which extends in the vehicle width direction between the side sills is made of a tube-shaped frame, a connection between the side sills and the cross member;
(iii) in case right and left front side frames are made of a tube-shaped frame, and a cross member which extends in the vehicle width direction between the front side frames is made of a tube-shaped frame, a connection between the front side frames and the cross member; and
(iv) in case right and left roof side frames, front and rear headers and/or a roof cross member, which extend in the vehicle width direction between the roof side frames, are made of a tube-shaped frame, connections between the roof side frames and the front and rear headers or the roof cross members.

Although the embodiments are described separately, it should be understood that single feature(s) of one or more embodiment(s) may be combined with another embodiment and vice versa.

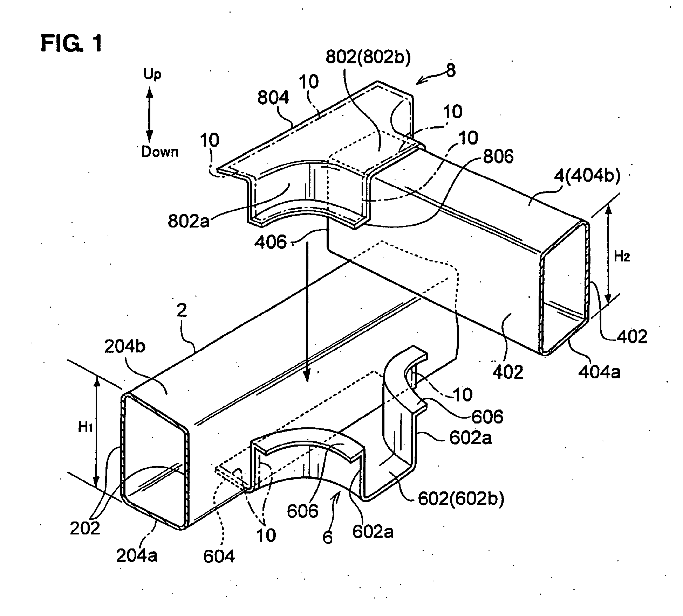

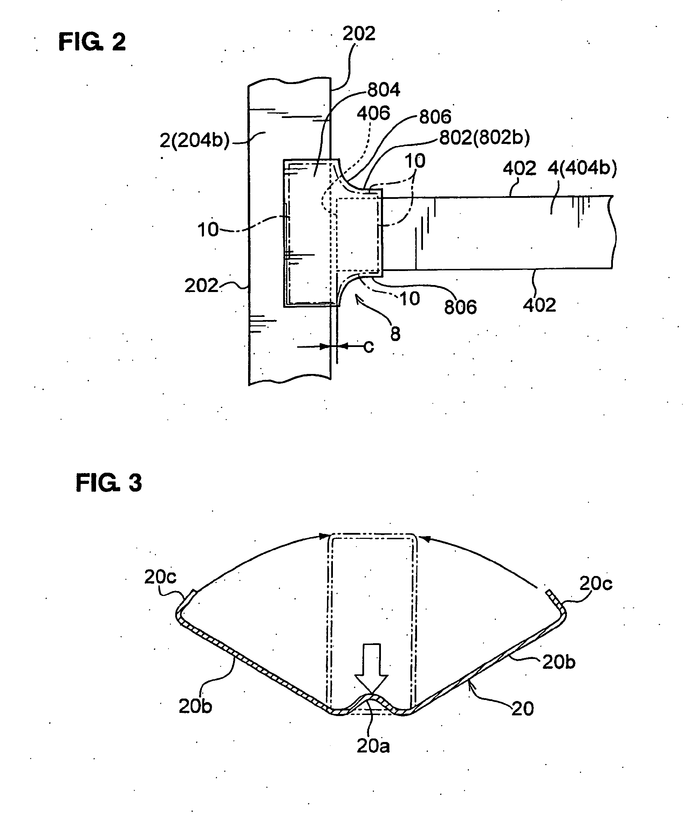

### EMBODIMENT 1 (FIGS. 1 and 2)

A first embodiment shows a connection structure in which first and second tube-shaped frames **2**, **4** are connected in a T shape. The first and second tube-shaped frames **2**, **4** have a structure having a closed rectangular cross section, respectively, which include two side walls **202**, **402** which face to each other and end walls **204**, **404** which face to each other. Of course, while the first and second tube-shaped frames **2**, **4** shown in the figures have a conceptual shape which may be preferable for explanation, any concrete sectional shape may be applicable. Further, the first and second tube-shaped frames **2, 4** shown in the figures have the same height H1, H2 (H1=H2), but they may have different heights.

While the first and second tube-shaped frames **2, 4** are arranged perpendicularly to each other in the example shown in the figures, this crossing angle of these frames **2, 4** is not limited to 90 degrees. The specific connection structure of the first and second tube-shaped frames **2, 4** will be described. The second tube-shaped frame **4** is arranged so that its one-end face **406** butts at the side wall **202** of the first tube-shaped frame **2.**

As apparent from FIG. **1****,** the first and second tube-shaped frames **2, 4** are connected with first and second slit-brackets **6, 8** which are split from each other vertically. The first split-bracket **6** which is located below comprises a bracket body **602** which has a complementary shape for a lower portion of the second tube-shaped frame **4,** and a first flange **604** which extends from the bracket body **602** along and on a lower end wall **404a** of the first tube-shaped frame **2** for its connection to the first tube-shaped frame **2.** More specifically, the bracket body **602** comprises both-side walls **602a, 602a** which face to the both-side walls **402, 402** of the second tube-shaped frame **4,** and a lower wall **602b** which extends between the lower ends of the both-side walls **602a, 602a** and faces to a lower end wall **404a** of the second tube-shaped frame **4.** This lower wall **602b** is of a fan shape so as to extend toward the first tube-shaped frame **2.** The both-side walls **602a, 602a** of the first bracket **6** curve in the plan view so that the distance between the both-side walls **602a, 602a** becomes wider gradually toward the first tube-shaped frame **2.** At respective upper edges of the side walls **602a** are formed second flanges **606** which extend outwardly. These second flanges **606** extends along a split line of the first and second split-brackets **6, 8.**

The second split-bracket **8** which is located above has substantially the same shape as the first tube-shaped frame **6.** That is, the second split-bracket **8** comprises a bracket body **802** which has a complementary shape for an upper portion of the second tube-shaped frame **4,** and a first flange **804** which extends from the bracket body **802** along and on an upper end wall **404b** of the first tube-shaped frame **2.** More specifically, the bracket body **802** comprises both-side walls **802a, 802a** which face to the both-side walls **402, 402** of the second tube-shaped frame **4,** and an upper wall **802b** which extends between the upper ends of the both-side walls **802a, 802a** and faces to an upper end wall **404b** of the second tube-shaped frame **4.** This upper wall **802b** is of the fan shape so as to extend toward the first tube-shaped frame **2.** The both-side walls **802a, 802a** of the second bracket **8** curve in the plan view so that the distance between the both-side walls **802a, 802a** becomes wider gradually toward the first tube-shaped frame **2.** At respective lower edges of the side walls **802a** are formed second flanges **806** which extend outwardly. Accordingly, the strength of the connection using the first and second split-brackets **6, 8** can be increased.

The first and second tube-shaped frames **2, 4** are connected to each other, preferably through the following steps.

### [First Step]

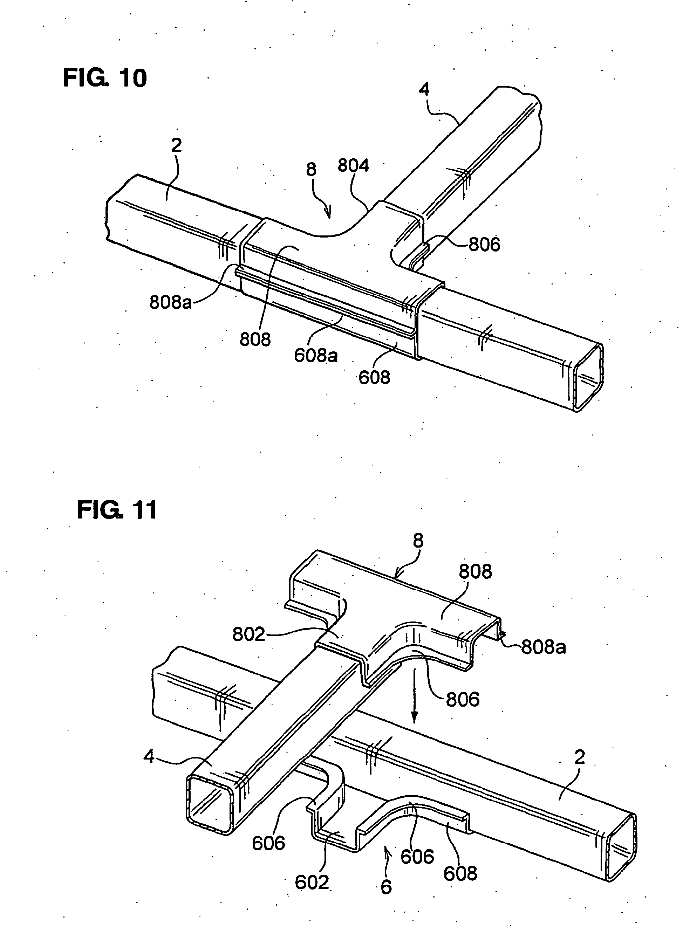

The respective peripheral edges of the first flange **604** and the side walls **602a** of the first split-bracket **6** are joined to the lower end wall **204a** and the side wall **202** of the first tube-shaped frame **2,** respectively, by the one-side continuous welding such as laser welding. The laser welding portion is shown by a one-dotted broken line in FIG. **10****.** As apparent from FIG. **1**, this laser welding is applied so as to extend continually along the peripheral edges of the first and second split-brackets **6, 8.**

### [Second Step]

The peripheral edge of the bracket body **802** of the second split-bracket **8** is joined to the upper end wall **404b** and the both-side walls **402** of the end portion of the second tube-shaped frame **4** by the one-side continuous welding, such as the laser welding. Likewise, the laser welding portion is shown by the one-dotted broken line in FIG. **10****.**

### [Third Step]

The second tube-shaped frame **4** with the second split-bracket **8** is assembled to the first tube-shaped frame **2** with the first split-bracket **6.** This assembling is conducted by inserting the end portion of the second tube-shaped frame **4** into the first split-bracket **6** which is joined to the first tube-shaped frame **2** from above. Thus, the second flanges **606, 806** of the first and second split-brackets **6, 8** are overlapped.

### [Fourth Step]

The flanges **606, 806** of the first and second split-brackets **6, 8** are joined by temporary spot welding. Herein, this fourth step of temporary joining may be omitted.

### [Fifth Step]

The flanges **606, 806** of the first and second split-brackets **6, 8** are joined by one-side continuous welding, such as the laser welding.

According to the connection structure of the tube-shaped frames **2, 4** using the first and second split-brackets **6, 8,** the connection of the first and second tube-shaped frames **2, 4** is possible even if there exits a gap **C** between the end face **406** of the second tube-shaped frame **4** and the side wall **202** of the first tube-shaped frame **2.**

Further, in the conventional assembly line for the monocoque vehicle-body, the above-described temporary joining can be conducted in its spot joining area and then the final joining using the one-side continuous welding, such as the laser welding, can be conducted. Accordingly, the vehicle body with the tube-shaped frame structure can be manufactured properly.

Herein, the above-described first and second steps may be conducted in a subassembly line or a frame supplier, and the above-described third through fifth steps may be conducted in a body assembly line of an automotive vehicle manufacturing factory after a supply of the first and second tube-shaped frames **2, 4** to which the first and second split-brackets **6, 8** are joined.

While the above-described first and second tube-shaped frames **2, 4** may be comprised of the hollow member disclosed in the above-described second and third publications, a hollow member having a rectangular cross section which is formed by a method shown in FIGS. **3** through **8** may be applied.

The above-described tube-shaped frame structure is applicable to the frame structure of the vehicle roof. In this case, the first tube-shaped frame **2** corresponds to a pair of roof side frames which extend in the vehicle longitudinal direction at right and left end portions of the vehicle roof, and the second tube-shaped frame **4** corresponds to a front or rear header which is arranged at a vehicle front or rear end, or a roof cross member which is arranged at a middle position of the roof.

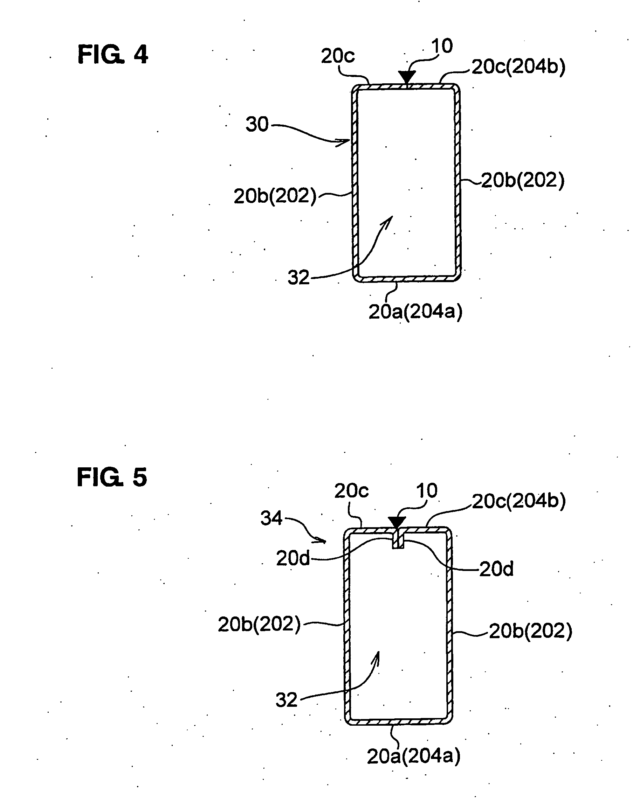

### Embodiment of Tube-Shaped Frame (FIGS. 3 and 4)

FIG. **3** shows the tube-shaped frame which is formed by bending a sheet of iron-based metal plate member **20.** Specifically, the iron-based metal plate member **20** comprises a middle portion **20a** which constitutes the lower end walls **204a, 404a** of the first and second tube-shaped frames **2, 4,** and this middle portion **20a** is formed in a curve shape so as to project upward. Portions **20b** which extend to the right and the left from the middle portion **20a** respectively constitute the both-side walls **202, 402** of the first and second tube-shaped frames **2, 4.** Free ends of the portions **20b** end at bending end portions **20c** which bend substantially at a right angle. The both-side bending end portions **20c** constitute the upper end walls **204b, 404b** of the first and second tube-shaped frames **2, 4.**

The plate member **20** which has been formed in the shape as described above is in advance prepared, and then the middle portion **20a** is pressed downward with a specified jig so as to become flat. Thereby, the both-side portions 20b are changed so as to rise upward in the direction shown by an arrow, so that the end faces of the both-side bending end portions **20c** face to each other. These bending end portions **20c** are made butt at each other, and then these butting portions are jointed to each other by the one-side continuous welding, such as wire laser welding, thereby forming a tube-shaped frame **30** (FIG. **4**). This tube-shaped frame 30 has a closed cross section, like the hollow member which is formed by the hydro-forming. In FIG. **4****,** a reference numeral **10** denotes the laser welding portion.

While the closed cross section structure in the conventional monocoque body is formed by the spot welding of the flange portions, the above-described hollow member is formed by the continuous welding without any flanges welded. Accordingly, the tube-shaped frame **30** may be called as a "frame with no flange to form a frame."

### First Modification of Tube-Shaped Frame (FIG. 5)

A tube-shaped frame **34** as a first modification (FIG. **5**) includes the second bending portions **20d** which further bend at butting end portions of the both-side bending portions **20c** respectively. These second bending portions **20d** face to each other inside a closed cross section **32.** Herein, the second bending portions **20d** may be arranged outside the tube-shaped frame **34.** In this case, the base end portions of the second bending portions **20d** which are overlapped can be joined by the continuous welding.

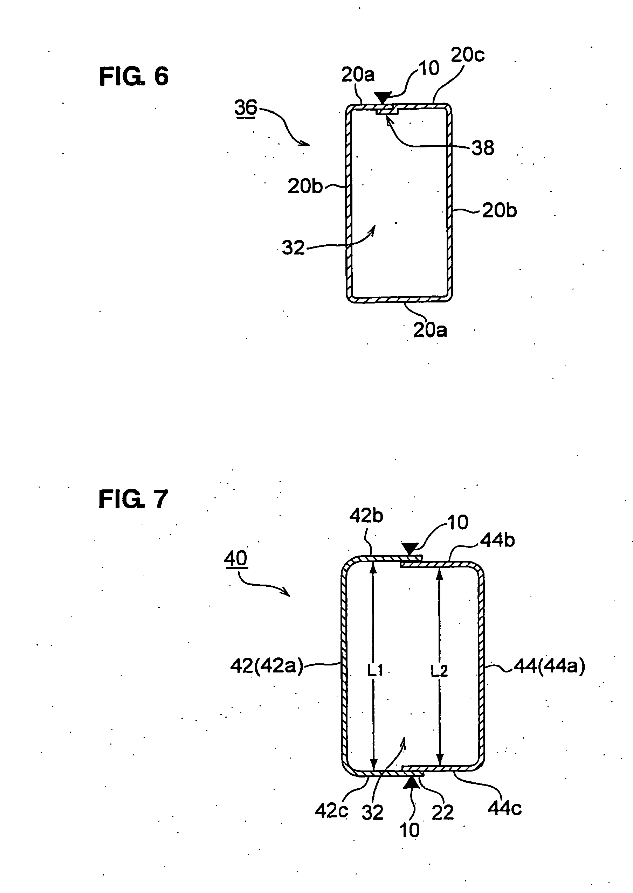

### Second Modification of Tube-Shaped Frame (FIG. 6)

A tube-shaped frame **36** as a second modification (FIG. **6**) includes a step portion **38** at one of the first bending portions **20c.** The other of the first bending portions **20c** is received at this step portion **38,** so that the other of the first bending portion **20c** and the step portion **38** of the one of the first bending portions 20c are overlapped and these overlapped portions are joined by the laser welding, for example.

### Third Modification of Tube-Shaped Frame (FIG. 7)

A tube-shaped frame 36 as a third modification (FIG. **7**) comprises split-frames **42, 44** which have a U-shaped cross section. These fames **42, 44** are joined by the laser welding at their overlapped portions. Thus, these first and second split-frames **42, 44** have the U-shaped cross sections which include two end portions **42b, 42c, 44b, 44c** which bend from the both ends of their central portions **42a, 44a.** The distance L1 between the end portions **42b, 42c** of the first split-frame **42** is slightly longer than the distance L2 between the end portions **44b, 44c** of the second split-frame **44** (L1>L2). Part of the end portions **42b, 42c** of the first split-frame **42** and part of the end portions **44b, 44c** of the second split-frame **44** are overlapped substantially vertically.

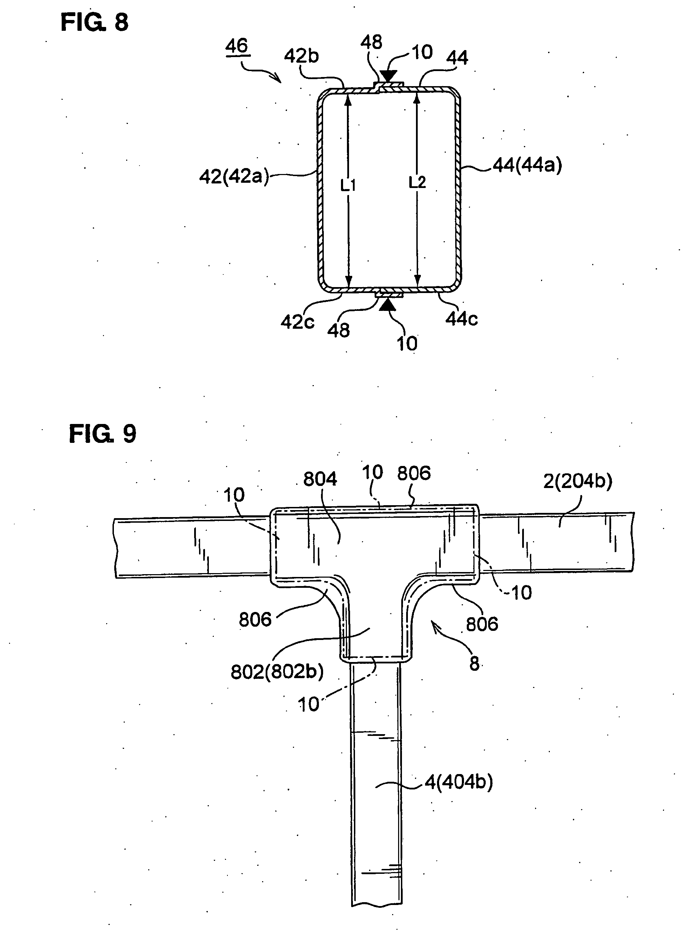

### Fourth Modification of Tube-Shaped Frame (FIG. 8)

FIG. **8** shows a modification **46** of the tube-shaped frame **4** of FIG. **7****.** According to the tube-shaped frame **46** of FIG. **8****,** the distance L1 between the end portions **42b, 42c** of the first split-frame **42** is equal to the distance L2 between the end portions **44b, 44c** of the second split-frame **44** (L1=L2). The end portions **42b, 42c** of the first split-frame **42** include step portions **48,** respectively, and the ends of the second split-frame **44** are received at these step portions **48.** Thus, part of the end portions **42b, 42c** of the first split-frame **42** and part of the end portions **44b, 44c** of the second split-frame **44** are overlapped substantially vertically.

### Modification of Connection Structure of First Embodiment (FIGS. 9-11)

While the first flanges **604, 806** of the first and second spilt-brackets **6, 8** are joined to the lower end wall **204a** and the upper end wall **404a** by the continuous welding in the above-described first embodiment (FIGS. **1** and **2**), according to the connection structure of the present modification (FIGS. **9-11**), split enclosing portions **608, 808** which enclose the first tube-shaped frame **2** are provided at the first and second split-brackets **6, 8,** and flanges **608a, 808a** are provided along split lines of the split enclosing portions **608, 808.** The flanges **608a, 808a** are overlapped and joined to each other by the continuous welding. Herein, of course, the overlapped flanges **608a, 808a** may be joined by spot welding in the first step, and then they may be joined by the one-side continuous welding such as the laser welding as the second step.

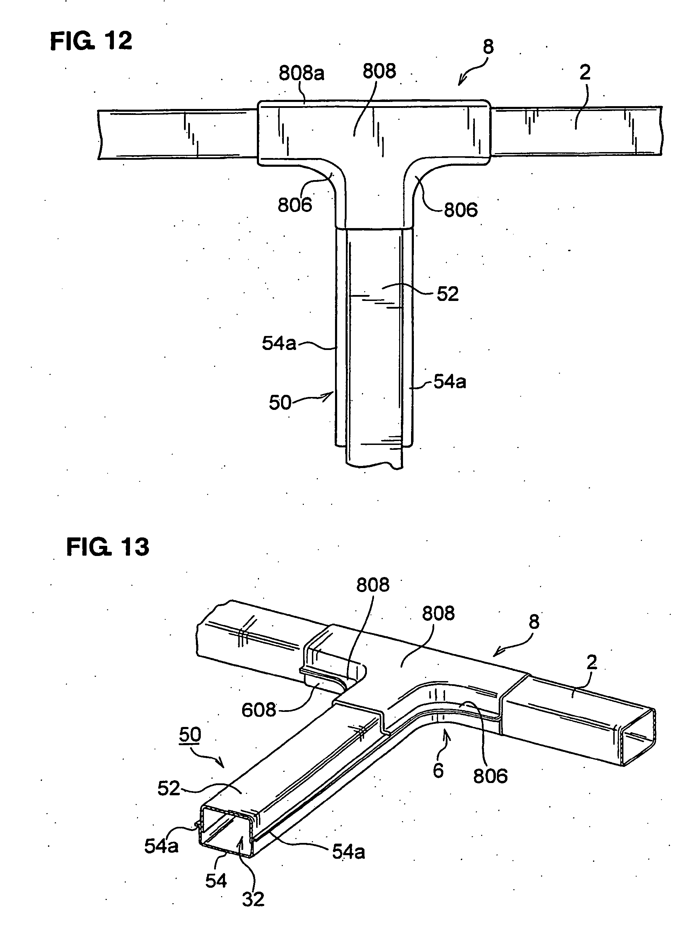

### Second Embodiment of Connection Structure (FIGS. 12-14)

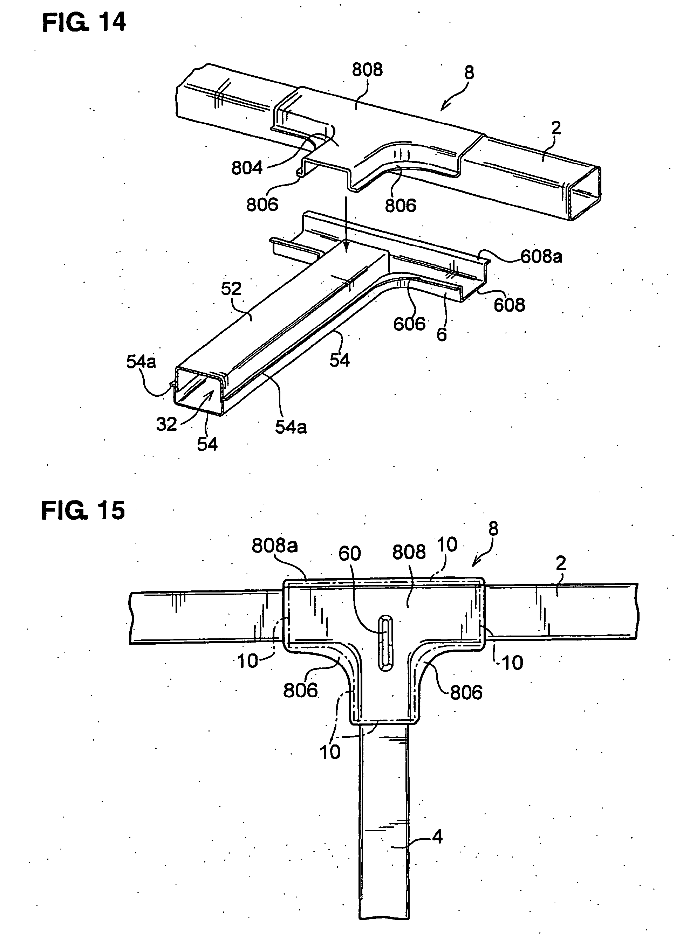

According to the connection structure of the second embodiment, a second tube-shaped frame **50** which connects to the side wall of the first tube-shaped frame **2** is comprised of two split-frames **52, 54** which have the U-shaped cross section as shown in FIGS. **7** and **8****.** The lower split-frame **54** has a pair of flanges **54a** which project outwardly. Herein, the above-described first split-bracket **6** is formed integrally with this lower split-frame **54,** which is apparent from FIG. **14****.** Herein, of course, the lower first split-bracket **6** which is formed integrally with the lower split-frame **54** may be the embodiment of FIG. **1****.**

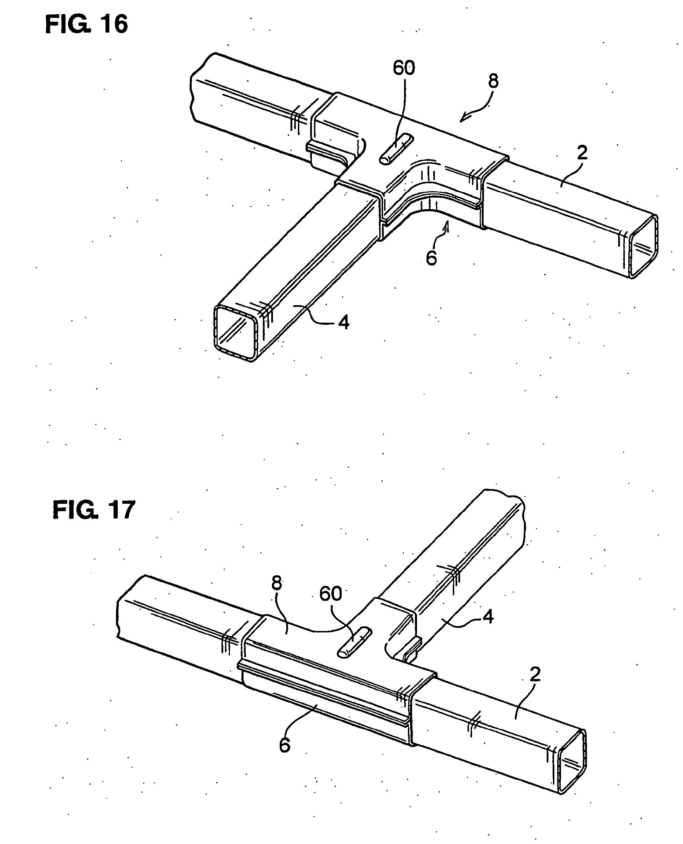

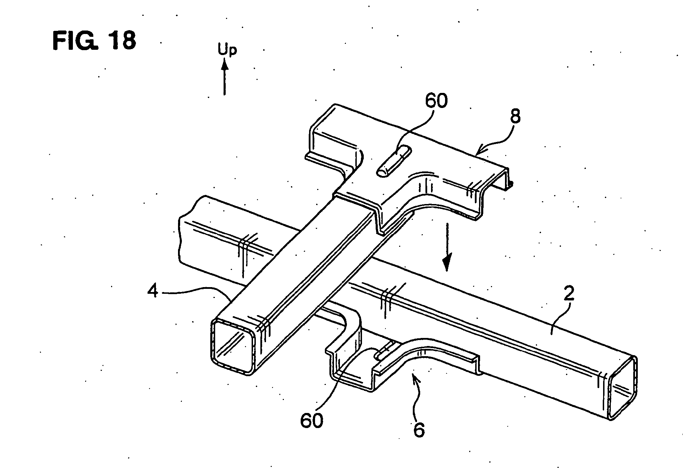

### Third Embodiment of Connection Structure (FIGS. 15-18)

FIGS. **15-18** show another embodiment, a third embodiment, in which a protruding portion **60** is provided at each of the borders between the bracket bodies **602, 802** and the enclosing portions **608, 808** of the first and second split-brackets **6, 8.** The third embodiment shown here is based on the split-brackets **6, 8** of the above-described modification of the first embodiment (FIGS. **9-11**). However, the feature of the third embodiment may be applied to the above-described first embodiment (FIG. 1) or the second embodiment (FIGS. **12-14**) as well.

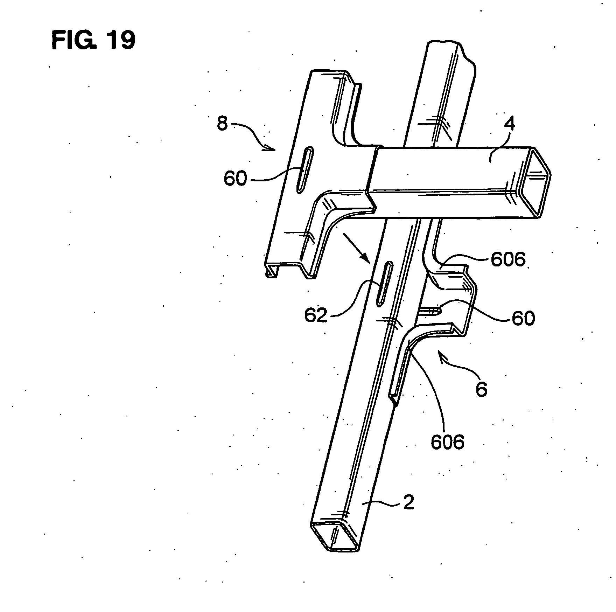

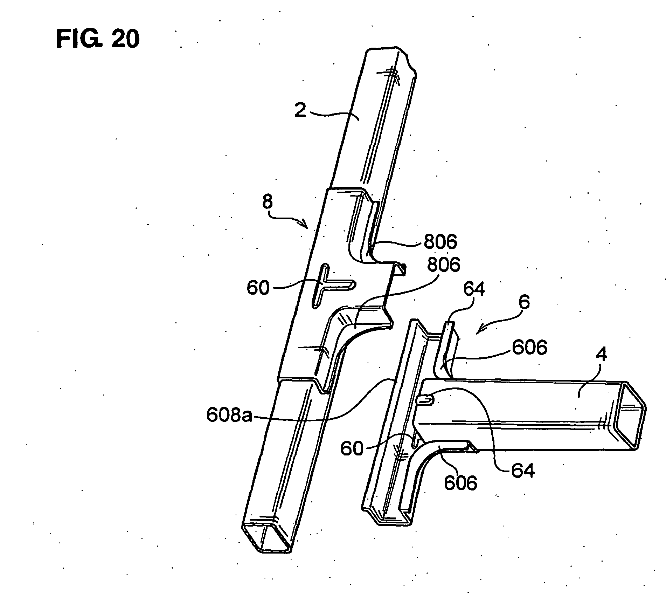

### Modification of Third Embodiment (FIGS. 19 and 20)

The protruding portions **60** of FIGS. **15-18** of the third embodiment may be configured to extend in the split enclosing portions **608, 808** of the split-brackets **6, 8** substantially in an extending direction of the first tube-shaped frame **2.** Further, second protruding portions **62** may be provided at the upper end wall **204b** and the lower end wall **204a** of the first tube-shaped frame **2** so as to correspond to the protruding portions **60** (FIG. **19**). Moreover, as another modification, as shown in FIG. **20****,** the first protruding portions 60 of the split-brackets **6, 8** may be formed in a T shape so as to extend in both extending directions of the first tube-shaped frame **2** and the second tube-shaped frame **4**. Herein, a third protruding portion **64** which extends substantially in the extending direction of the second tube-shaped frame **4** may be further provided at each of end portions of the upper end wall **404b** and the lower end wall **404a** of the end portion of the second tube-shaped frame **4** (FIG. **20**). Herein, FIG. **19** shows an example in which the straight protruding portion **60** which extends substantially in the extending direction of the first tube-shaped frame **2** is formed at the upper second split-bracket **8,** the T-shaped protruding portion **60** is formed at the lower first split-bracket **6,** and the third protruding portion **64** is formed at the end portion of the lower end wall **404a** of the second tube-shaped frame **4**.

The positions and shapes (concave and convex) of the above-described protruding portions **60**, **62**, **64** may be set so that the respective flanges of the first and second tube-shaped frames **2**, **4** which are to be joined by welding can located at their proper positions by moving these frames **2**, **4** when these frames **2**, **4** are assembled (the third step described above).

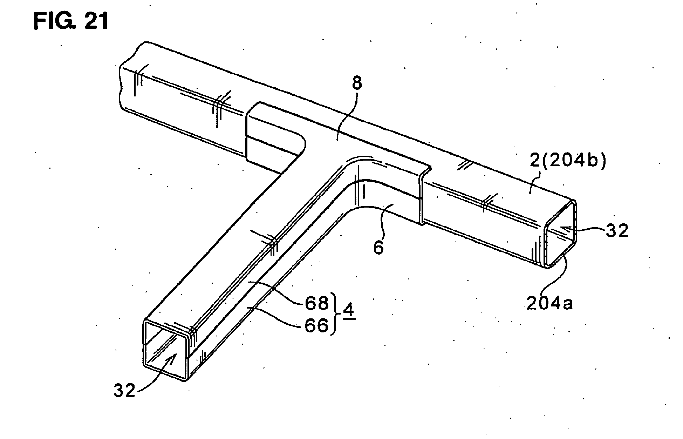

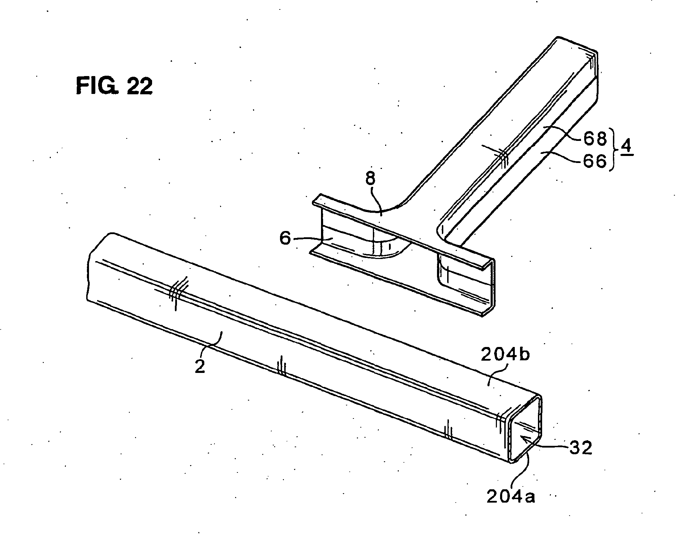

### First example of Connection Structure (FIGS. 21-23)

According to a first example, the second tube-shaped frame **4** is comprised of a pair of split-frames **66**, **68**, and the above-described first and second split-brackets **6**, **8** are formed integrally with these split-frames **66**, **68**. In the first example the first and second split-brackets **6**, **8** preferably include the second flanges **604**, **804** which contact the end walls **204a**, **204b** of the first tube-shaped frame **2** shown in FIG. **1****.** Herein, while the second tube-shaped frame **4** is formed by applying the continuous welding along the split line of the split-frames **66**, **68** in this illustrated example, the flange joining of the split-frames **66**, **68** may be applied. In this case, of course, it is preferable that the first and second split-brackets **6**, **8** have the flanges **606**, **806** as well.

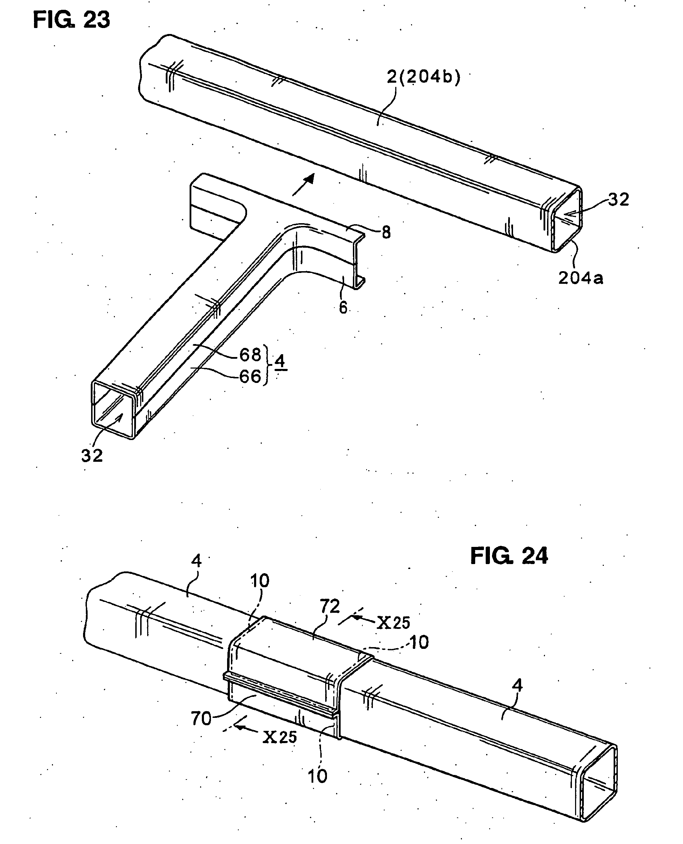

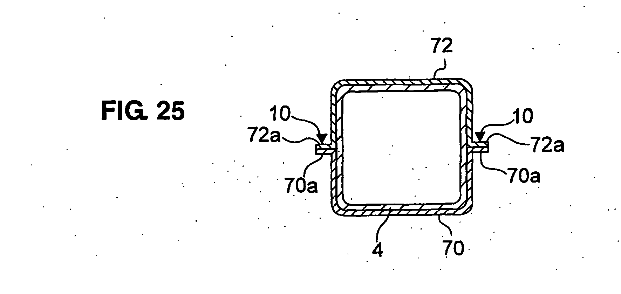

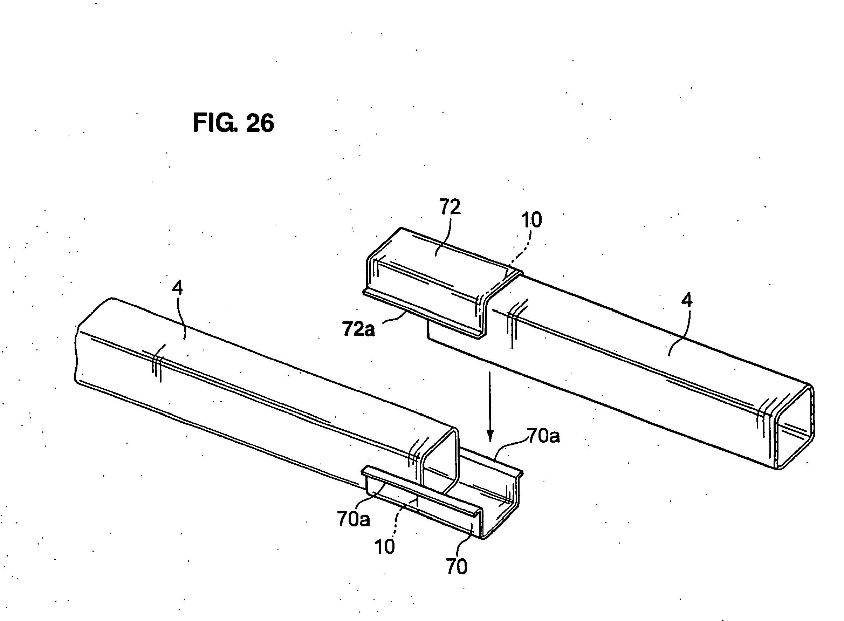

### Second example of Connection Structure (FIGS. 24-26)

A second example is an example in which respective ends of the tube-shaped frames **4**, **4** which are arranged in series are connected. First and second split-brackets **70**, **72** which have a U-shaped cross section are provided so as to be positioned over the facing ends of the two tube-shaped frames **4**, **4**, and these split-brackets **70**, **72** are disposed so that their flanges **70a**, **72a** which extend along their split line are overlapped. These flanges **70a**, **72a** are joined by the continuous welding with the laser welding. The two tube-shaped frames **4**, **4** which are arranged in series are joined to each other by welding the edges of the first and second split-brackets 70, 72. The continuous welding line is denoted by the reference numeral **10**.

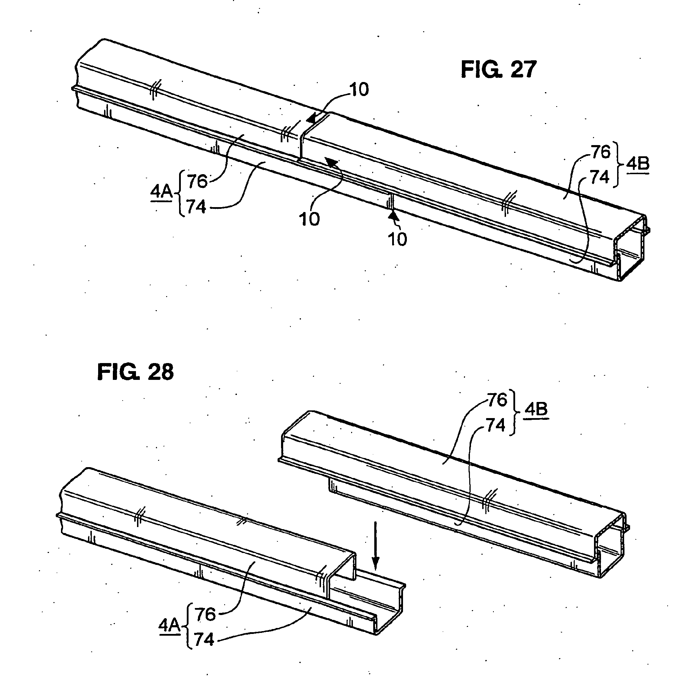

### Modification of second example (FIGS. 27 and 28)

FIGS. **27** and **28** show a modification of the above-described second example (FIGS. **15-18**), in which two tube-shaped frames **4A, 4B** which are connected in series comprise two split-frames **74**, **76**, respectively. In the left-side tube-shaped frame **4A**, the lower split-frame **74** is longer than the upper split-frame **76**. In the right-side tube-shaped frame **4B**, the upper split-frame **76** is longer than the lower split-frame **74**. Respective contacting portions of the tube-shaped frames **4A**, **4B** are joined by the continuous welding with the laser welding.

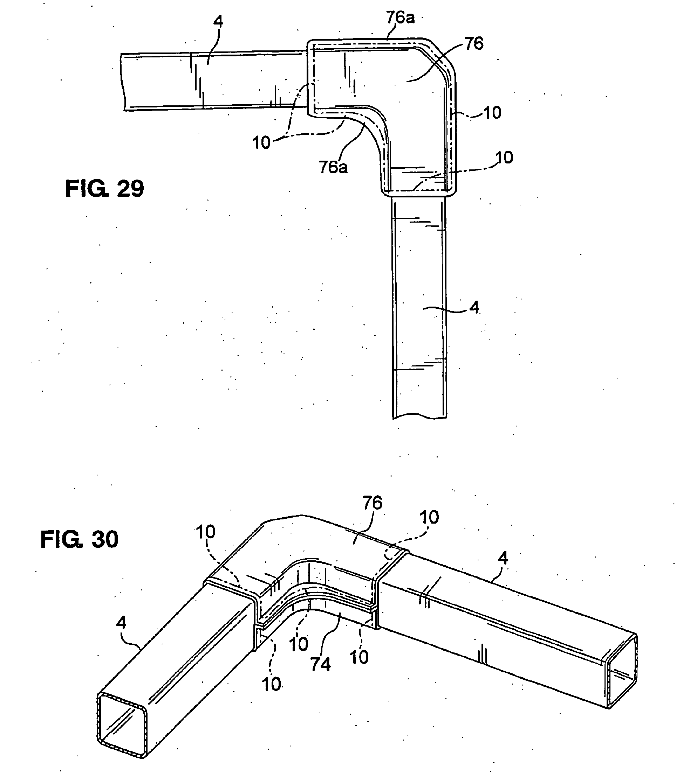

### Third example of Connection Structure (FIGS. 29-32)

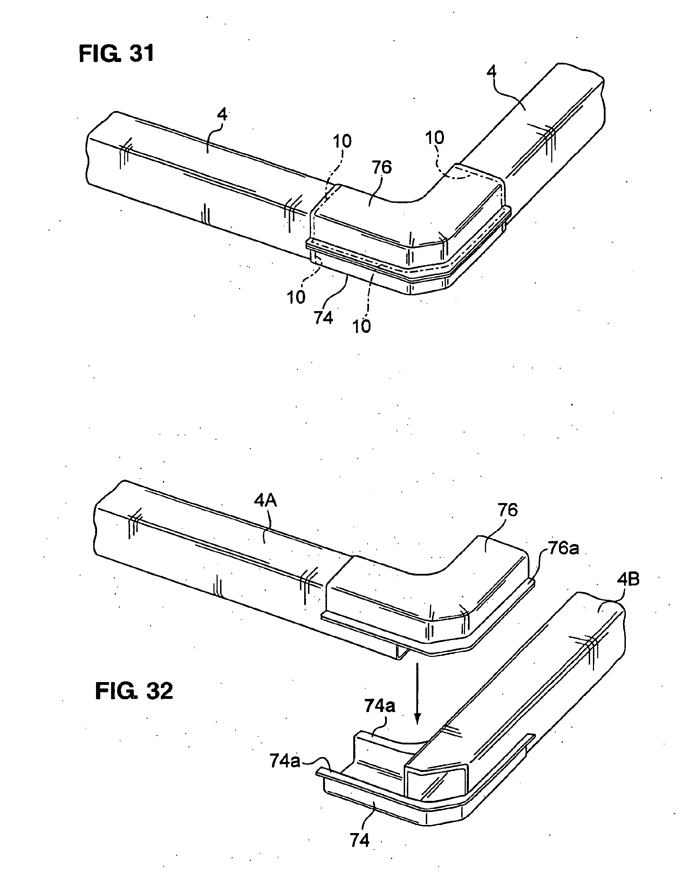

A third example is an example in which the tube-shaped frames **4**, **4** are connected to each other in the L shape. First and second split-brackets **74**, **76** which have a U-shaped cross section have an L shape in the plan view. As apparent from FIG. **32**, the end face of the first tube-shaped frame **4** (**4A**) is disposed so as to contact the side wall of the second tube-shaped frame **4** (**4B**) (FIG. **32**). The both end portions of the first and second split-brackets **4**, **4** which face to each other are enclosed by the first and second split-brackets **74**, **76**, and flanges **74a**, **76a** of the first and second split-brackets **74**, **76** and the end portions of these split-brackets **74**, **76** are joined by the continues welding with the laser welding. Thereby, the first and second tube-shaped frames **4**, **4** are joined in the L shape. The substantial length of the first and second tube-shaped frames **4**, **4** can be properly controlled by adjusting the gap formed between these frames **4**, **4**.

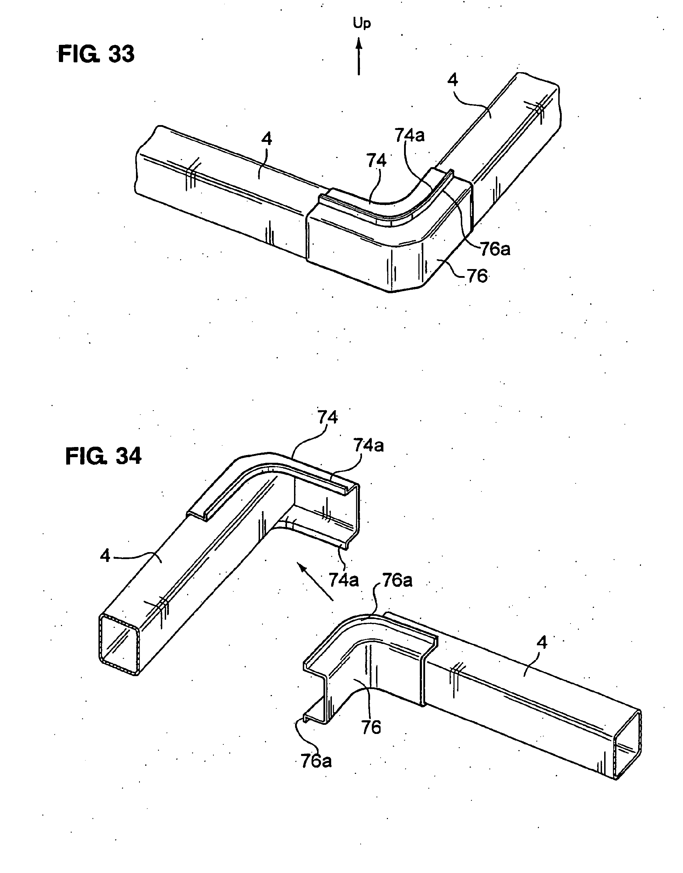

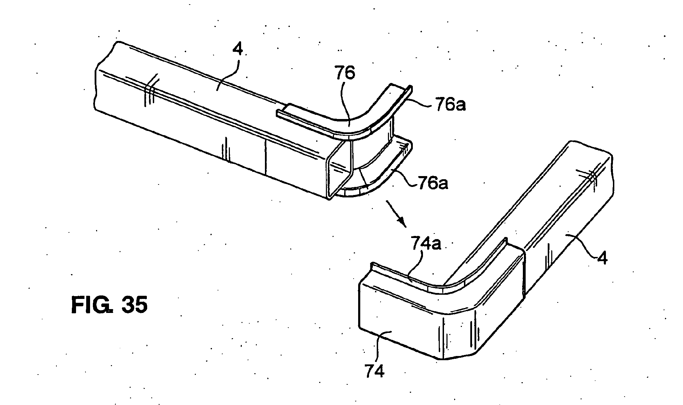

### Modification of third example (FIGS. 33-35)

While the first and second split-brackets **74, 76** are arranged vertically in the above-described third example, they may be arranged laterally as shown in FIGS. **33-35**.

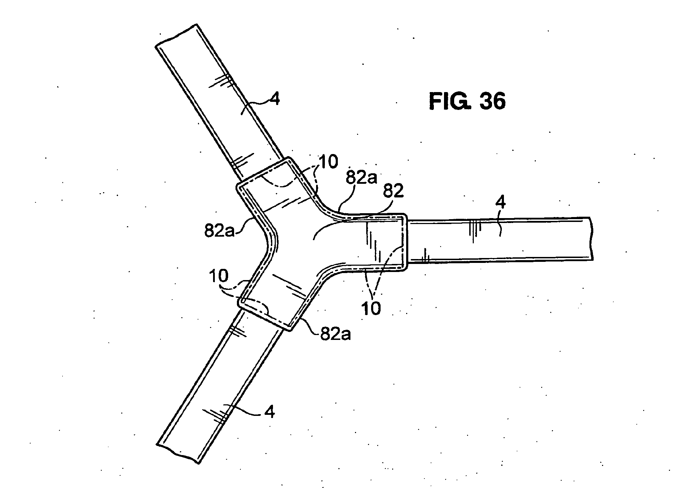

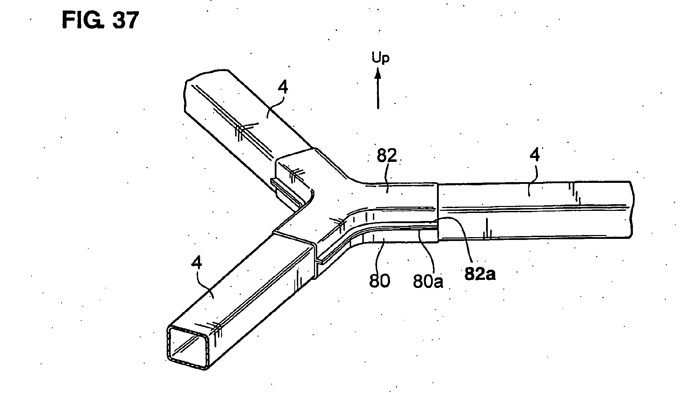

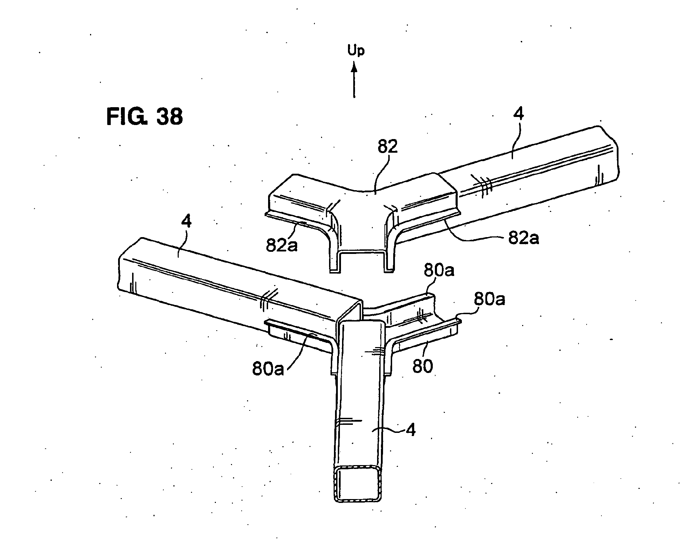

### Fourth example of Connection Structure (FIGS. 36-38)

A fourth example is an example in which the three tube-shaped frames **4**, **4** are connected substantially in a Y shape in the plan view. In the fourth example upper and lower split-brackets **80**, **82**, which have the Y shape in the plan view, are arranged so as to enclose the end portions of the three tube-shaped frames **4**. Flanges **80a, 80b** of these split-brackets **80**, **82** which extend along the split line of these brackets **80**, **82** are overlapped and joined by the continuous welding. Thereby, the three tube-shaped frames **4** can be joined in the Y shape.

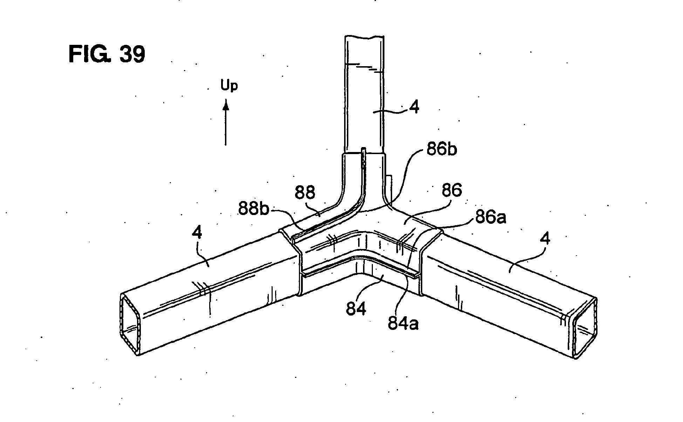

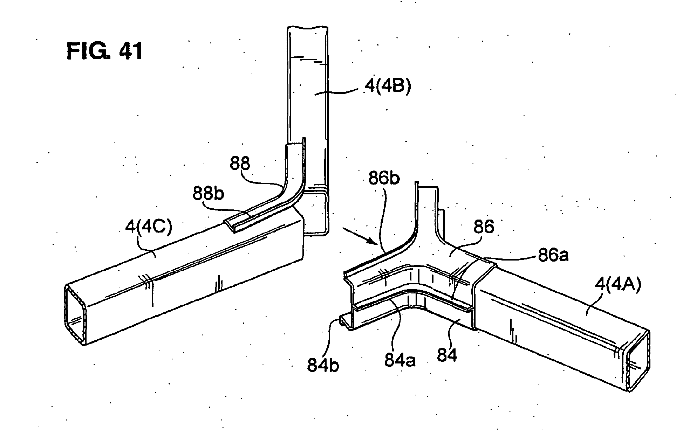

### Modification of fourth example (FIGS. 39-41)

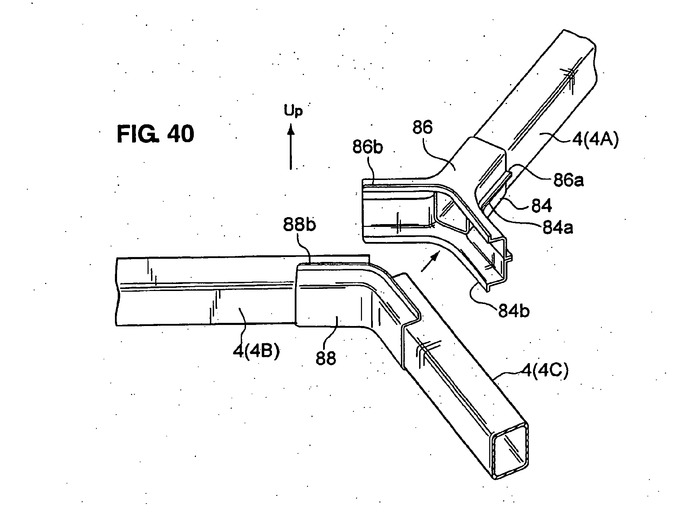

While the Y-shaped split-brackets **80**, **82** are configured to be arranged vertically above and below the connection portion of the three tube-shaped frames **4** in the above-described fourth example, another example comprising three split-brackets **84**, **86**, **88** will be described as a modification of the fourth example. Herein, first and second split-brackets **84**, **86** which have a Y shape in the plan view are arranged vertically at the connection portion of the three tube-shaped frames **4**, and these first and second split-brackets **84**, **86** and a third bracket **88** are arranged laterally side by side. According to the modification, the first and second split-brackets **84**, **86** are joined to a tube-shaped frame **4A** by the continuous welding and the third split-bracket **88** is joined to another tube-shaped frame **4B** by the continuous welding in advance. Or, the third split-bracket **88** may be preferably joined to the other tube-shaped frame **4C** in advance (FIG. **40**). Then, in the vehicle assembly line, the two tube-shaped frames **4**, **4** which are joined to each other via the third split-bracket **88** are assembled to the first and second split-brackets **84**, **86** so that vertical flanges **84b**, **86b**, **86b** are overlapped. These overlapped flanges are spot-welded for temporary assembling. Finally, the flanges **84b**, **86b**, **86b** are joined to each other by the continuous wielding with the laser welding, so that the three tube-shaped frames **4** can be joined in the Y shape.

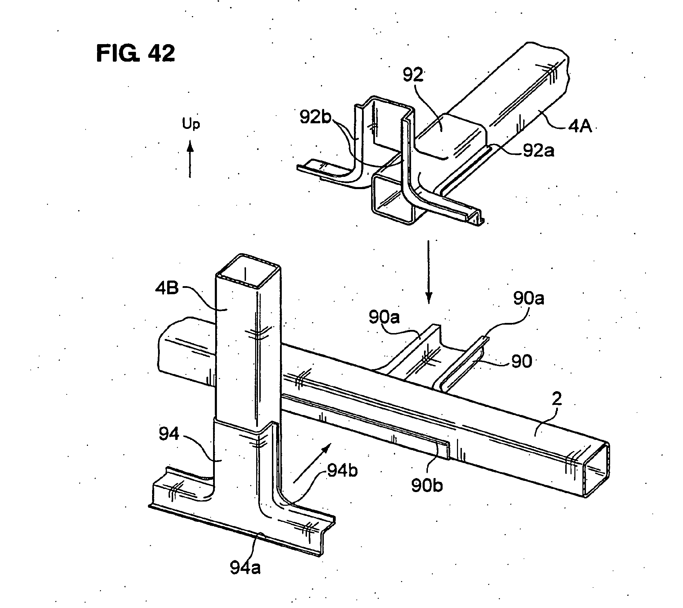

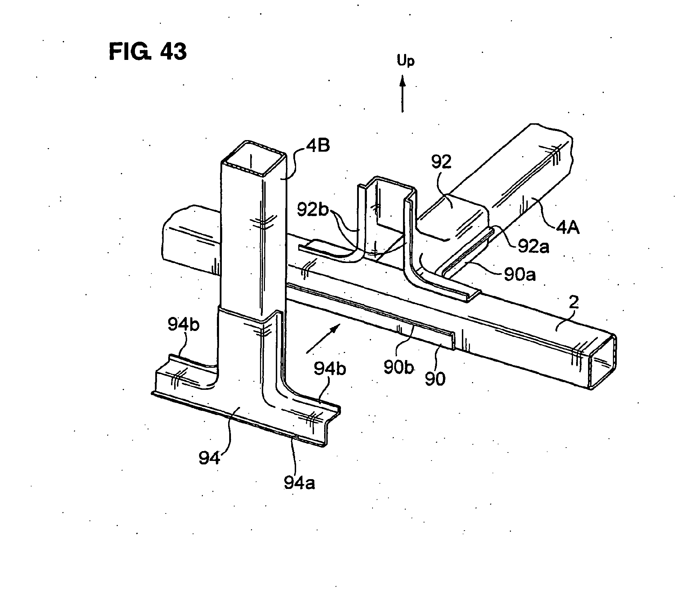

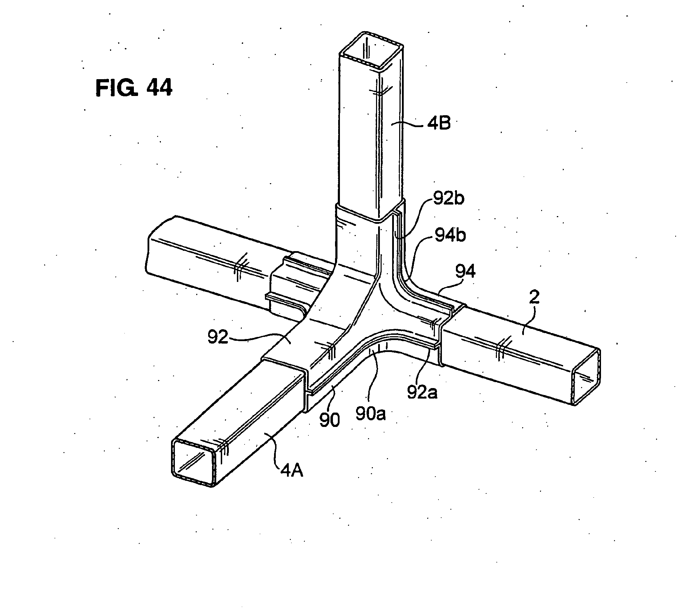

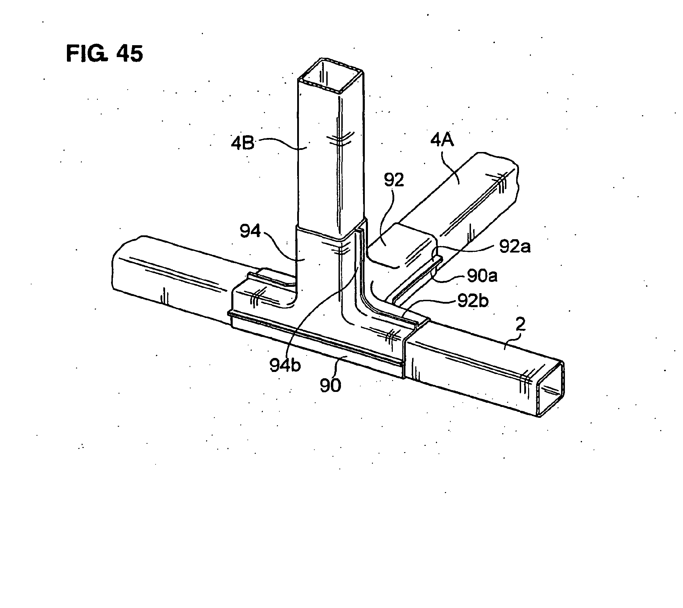

### Fifth example of Connection Structure (FIGS. 42-45)

In an fifth example the second tube-shaped frame**4A** is connected to the side wall **202** of the first tube-shaped frame **2**, and the third tube-shaped frame **4B** is connected to the end wall **204**, so that the connection portion of the three tube-shaped frames **2**, **4**, **4** are formed as a solid structure. Three split-brackets **90**, **92**, **94** are provided in this fifth example.

A first split-bracket **90**, which has the T shape in the plan view of the first tube-shaped frame, has a structure which corresponds to the first tube-shaped frame **2** and a lower portion of the second tube-shaped frame **4A** which is connected to the first tube-shaped frame **2** in the T shape in the horizontal face. A second split-bracket **92** has a structure which covers half of the upper portion of the first tube-shaped frame **2**, the upper portion of the second tube-shaped frame **4A**, and half of the third tube-shaped frame **4B** which rises from the first tube-shaped frame **2**. A third split-bracket **94** has a structure which covers partially the first tube-shaped bracket **2** and the third tube-shaped frame **4B**. The connection structure of the first, second and third tube-shaped frames **2**, **4A, 4B** is formed by the first, second and third split-brackets **90**, **92**, **94** which are assembled together.

According to the fifth example, the first split-bracket **90** is joined to the first tube-shaped frame **2** by the continuous welding, the second split-bracket **92** is joined to the second tube-shaped frame **4A** by the continuous welding, and the third split-bracket **94** is joined to the third tube-shaped frame **4B** by the continuous welding in advance. Then, in the vehicle assembly line, these three split-brackets **90**, **92**, **94** are assembled together so that flanges **90a**, **92a** are overlapped, flanges **90b**, **94a** are overlapped, and flanges **92b**, **94b** are overlapped, respectively. These overlapped flanges are spot-welded for temporary assembling. Finally, these flanges are joined to each other by the continuous welding with the laser welding, so that the three tube-shaped frames **2**, **4A**, **4B** can be joined as the solid structure. Herein, the above-described spot-welding may be omitted as described before.

Any type of non-iron-based fillers, such as foaming resin, may be filled into the connection portion of the tube-shaped frames **2**, **4** or **4**, **4** in the above-described embodiments and examples. Thereby, the connection strength can be increased. Since the flanges **606**, **806** of the split-brackets **6**, **8** are provided so as to face to each other and these flanges **606**, **806** are joined in the above-described first embodiment or others, the gaps between the frames **2**, **4** can be controlled properly by adjusting the relative positions of the flanges **606**, **806**.

Further, while the split-brackets **6**, **8** are joined via the flanges **606**, **806** in the first embodiment or others, these flanges may be omitted and respective ends of the side walls **602a**, **802a** of the split-brackets may be joined by the continuous welding with laser welding instead.

Moreover, while the above-described embodiments and examples show the examples in which the split brackets (**6**, **8** ...) or the split frames (**52**, **54** ....) are comprised of a pair of split members which is arranged substantially in the vertical direction of the vehicle, the present invention is applicable to any other structure in which these members are arranged in another specified direction, such as the lateral direction or the longitudinal direction of the vehicle.

The present invention should not be limited to the above-descried embodiments and their modifications, and any other improvements may be applied within the scope of the present invention, as defined by the appended claims.

## Claims

1. An assembly method of tube-shaped frames, comprising the steps of:
providing at least two tube-shaped frames (**2**, **4**), wherein the tube-shaped frames (**2**, **4**) comprise a pair of roof side frames (**2**) which are provided at both sides of a vehicle body and a roof cross member (**4**) which extends substantially perpendicularly to the roof side frames so as to connect to the roof side frames (2) at both ends thereof;
a step of providing a pair of split-brackets (**6**, **8**) which is arranged in a specified direction, preferably a lower split-bracket (**6**) and an upper split-bracket (**8**), each of the split-brackets (**6**, **8**) having a flange (**806**, **606**) which extends along a split line of the split-brackets (**8**, **6**);
arranging the pair of split-brackets (**6**, **8**) at a connection portion of said tube-shaped frames (**2**, **4**), each of the split-brackets (**6**, **8**) having a shape for receiving part of the tube-shaped frames (**2**, **4**) at said connection portion,
**characterized by**
a first step of joining one (**6**) of the split-brackets (**6**, **8**) to a portion of the roof side frame (**2**), preferably by one-side continuous welding;
a second step of joining the other (**8**) of the split-brackets to another portion of the end of the roof cross member (**4**), preferably by one-side continuous welding;
a third step of assembling the other (**8**) of the split-brackets joined to the roof cross member (**4**) to the one (**6**) of the split-brackets joined to the roof side frame (**2**);
a fourth step of joining the flanges (**806**, **606**) of the split-brackets (**8**, **6**) which are overlapped.

2. The assembly method of tube-shaped frames of claim 1, further comprising the steps of:
welding said split-brackets (**6**, **8**) at facing portions thereof to each other, preferably by continuous welding; and/or
welding each of the split-brackets to at least one of the tube-shaped frames (**2**, **4**) which is located adjacent thereto, preferably by one-side continuous welding.

3. An assembly method of tube-shaped frames of claim 1 or 2, the assembly method further comprising:
a step of providing brackets for connecting the both ends of the roof cross member (**4**) to the roof side frames (**2**).

4. An assembly method of tube-shaped frames of any one of the preceding claims, wherein the fourth step of joining the flanges of the split brackets (8, 6) comprises the steps of:
temporary welding; and
a fifth step of joining said flanges (**806, 606**) joined by the temporary welding by one-side continuous welding.

5. An assembly method of tube-shaped frames of any one of the preceding claims, wherein
respective peripheral edges of a first flange (604) and side walls (602a) of one (6) of the split-brackets are joined to a lower end wall (204a) and a side wall (202) of the roof side frame (2), respectively, by one-side continuous Welding, and
a peripheral edge of a bracket body (802) of the other (8) of the split-brackets is joined to an upper end wall (404b) and the both-side walls (402) of the end portion of the roof cross member (4) by one-side continuous welding.

## Patentansprüche

1. Montageverfahren für rohrförmige Rahmen, umfassend die Schritte:
Bereitstellen zumindest zweier rohrförmiger Rahmen (2, 4), wobei die rohrförmigen Rahmen (2, 4) ein Paar Dachseitenrahmen (2), die an beiden Seiten eines Fahrzeugaufbaus vorgesehen sind, und ein Dachquerglied (4) umfassen, das sich im Wesentlichen senkrecht zu den Dachseitenrahmen erstreckt, um die Dachseitenrahmen (2) an beiden Enden davon zu verbinden;
einen Schritt des Bereitstellens eines Paars geteilter bzw. Teilträger bzw. -halter (6, 8), die in einer spezifizierten Richtung angeordnet sind, und zwar vorzugsweise einen unteren geteilten bzw. Teilträger bzw. -halter (6) und einen oberen geteilten bzw. Teilträger bzw. -halter (8), wobei jeder der Teilhalter (6, 8) einen Flansch (806, 606) aufweist, der sich entlang einer geteilten bzw. Teillinie der Teilhalter (8, 6) erstreckt;
Anordnen des Paars Teilhalter (6, 8) an einem Verbindungsabschnitt der rohrförmigen Rahmen (2, 4), wobei jeder der Teilhalter (6, 8) eine Form zum Aufnehmen eines Teils der rohrförmigen Rahmen (2, 4) an dem Verbindungsabschnitt aufweist,
**gekennzeichnet durch**
einen ersten Schritt des Zusammenfügens eines (6) der Teilhalter (6, 8) mit einem Abschnitt des Dachseitenrahmens (2), vorzugsweise **durch** einseitiges kontinuierliches bzw. Durchlaufschweißen;
einen zweiten Schritt des Zusammenfügens des anderen (8) der Teilhalter mit einem anderen Abschnitt des Endes des Dachquerglieds (4), vorzugsweise durch einseitiges kontinuierliches bzw. Durchlaufschweißen;
einen dritten Schritt des Montierens des anderen (8) der Teilhalter, der mit dem Dachquerglied (4) zusammengefügt ist, mit dem einen (6) der Teilhalter, der mit dem Dachseitenrahmen (2) zusammengefügt ist;
einen vierten Schritt des Zusammenfügens der Flansche (806, 606) der Teilhalter (8, 6), die überlappt sind.

2. Montageverfahren für rohrförmige Rahmen nach Anspruch 1, ferner umfassend die Schritte:
Schweißen der Teilhalter (6, 8) aneinander an zugewandten Abschnitten davon, vorzugsweise durch kontinuierliches bzw. Durchlaufschweißen; und/oder
Schweißen jedes der Teilhalter an zumindest einen der rohrförmigen Rahmen (2, 4), der sich angrenzend bzw. benachbart dazu befindet, vorzugsweise durch einseitiges kontinuierliches bzw. Durchlaufschweißen.

3. Montageverfahren für rohrförmige Rahmen nach Anspruch 1 oder 2, wobei das Montageverfahren ferner umfasst:
einen Schritt des Bereitstellens von Trägern bzw. Haltern zum Verbinden der beiden Enden des Dachquerglieds (4) mit den Dachseitenrahmen (2).

4. Montageverfahren für rohrförmige Rahmen nach einem der vorhergehenden Ansprüche, wobei der vierte Schritt des Zusammenfügens der Flansche der Teilhalter (8, 6) die Schritte umfasst:
temporäres Schweißen; und
einen fünften Schritt des Zusammenfügens der Flansche (806, 606), die durch das temporäre Schweißen zusammengefügt werden, durch einseitiges kontinuierliches bzw. Durchlaufschweißen.

5. Montageverfahren für rohrförmige Rahmen nach einem der vorhergehenden Ansprüche, wobei
jeweilige Umfangskanten bzw. -ränder eines ersten Flansches (604) und Seitenwände (602a) eines (6) der Teilhalter mit einer unteren Endwand (204a) und einer Seitenwand (202) des Dachseitenrahmens (2) zusammengefügt werden, und war jeweils durch einseitiges Durchlaufschweißen, und
eine Umfangskante bzw. -rand eines Träger- bzw. Halterkörpers (802) des anderen (8) der Teilhalter mit einer oberen Endwand (404b) und den beidseitigen Wänden (402) des Endabschnitts des Dachquerglieds (4) durch einseitiges Durchlaufschweißen zusammengefügt wird.

## Revendications

1. Procédé d'assemblage de cadres tubulaires, comprenant les étapes consistant à :
fournir au moins deux cadres tubulaires (2, 4), dans lequel les cadres tubulaires (2, 4) comprennent une paire de cadres latéraux de toit (2) qui sont prévus des deux côtés d'une carrosserie de véhicule et une traverse de toit (4) qui s'étend essentiellement perpendiculairement aux cadres latéraux de toit de manière à se connecter aux cadres latéraux de toit (2) aux deux extrémités de ceux-ci ;
une étape consistant à fournir une paire de supports séparés (6, 8) qui est agencée dans une direction spécifiée, de préférence un support séparé inférieur (6) et un support séparé supérieur (8), chacun des supports séparés (6, 8) ayant une bride (806, 606) qui s'étend le long d'une ligne de séparation des supports séparés (8, 6) ;
agencer la paire de supports séparés (6, 8) au niveau d'une portion de connexion desdits cadres tubulaires (2, 4), chacun des supports séparés (6, 8) ayant une forme pour recevoir une partie des cadres tubulaires (2, 4) au niveau de ladite portion de connexion,
**caractérisé par**
une première étape consistant à relier un (6) des supports séparés (6, 8) à une portion du cadre latéral de toit (2), de préférence par une soudure continue unilatérale ;
une deuxième étape consistant à relier l'autre (8) des supports séparés à une autre portion de l'extrémité de la traverse de toit (4), de préférence par une soudure continue unilatérale ;
une troisième étape consistant à assembler l'autre (8) des supports séparés reliés à la traverse de toit (4) au support séparé (6) relié au cadre latéral de toit (2) ;
une quatrième étape consistant à relier les brides (806, 606) des supports séparés (8, 6) qui se chevauchent.

2. Procédé d'assemblage de cadres tubulaires selon la revendication 1, comprenant en outre les étapes consistant à :
souder lesdits supports séparés (6, 8) au niveau de portions se faisant face de ceux-ci l'un à l'autre, de préférence par une soudure continue ; et/ou souder chacun des supports séparés à au moins un des cadres tubulaires (2, 4) qui est situé de manière adjacente à celui-ci, de préférence par une soudure continue unilatérale.

3. Procédé d'assemblage de cadres tubulaires selon la revendication 1 ou 2, le procédé d'assemblage comprenant en outre :
une étape consistant à fournir des supports pour connecter les deux extrémités de la traverse de toit (4) aux cadres latéraux de toit (2).

4. Procédé d'assemblage de cadres tubulaires selon l'une quelconque des revendications précédentes, dans lequel la quatrième étape consistant à relier les brides des supports séparés (8, 6) comprend les étapes consistant à :
souder temporairement ; et
une cinquième étape consistant à relier lesdites brides (806, 606) reliées par la soudure temporaire par une soudure continue unilatérale.

5. Procédé d'assemblage de cadres tubulaires selon l'une quelconque des revendications précédentes, dans lequel
des bords périphériques respectifs d'une première bride (604) et des parois latérales (602a) d'un (6) des supports séparés sont reliés à une paroi d'extrémité inférieure (204a) et une paroi latérale (202) du cadre latéral de toit (2), respectivement, par une soudure continue unilatérale, et
un bord périphérique d'un corps de support (802) de l'autre (8) des supports séparés est relié à une paroi d'extrémité supérieure (404b) et aux parois des deux côtés (402) de la portion d'extrémité de la traverse de toit (4) par une soudure continue unilatérale.
